# EUROPEAN PATENT APPLICATION

(11) **EP 1 587 305 A2**
(43) Date of publication of application: **19.10.2005**
(21) Application number: 05007680.1
(22) Date of filing: 07.04.2005
(51) Int. Cl.: H04N 5/00, H04N 7/24

(54) **Data storage system and method that supports personal video recorder functionality**

(30) Priority: 15.04.2004 US 562457 P; 03.02.2005 US 49905
(71) Applicant: Broadcom Corporation, Irvine, California 92618-7013 (US)
(72) Inventor: Ma, Kenneth, 95014 Cupertino CA (US)
(74) Representative: Jehle, Volker Armin

(57) **Abstract**

Various aspects of the invention provide a system, apparatus, and method of storing data in a storage device for use by one or more data processing devices, such as person video recorders, communicatively coupled to the data storage device. In a representative embodiment, the method comprises receiving data from the one or more personal video recorders, and storing the received data in the storage device, wherein the storage device acts as a centralized facility for storing data provided by the one or more personal video recorders. In a representative embodiment, a system for implementing a centralized storage mechanism used by one or more personal video recorders comprises a storage device comprising one or more storage drives and one or more switching devices that provides communicative coupling between the storage device and the one or more personal video recorders.

## Description

### CROSS-REFERENCE TO RELATED APPLICATIONS/INCORPORATION BY REFERENCE

This application makes reference to and claims priority from United States Provisional Patent Application Serial No. 60/562,457, entitled "DATA STORAGE SYSTEM AND METHOD THAT SUPPORTS PERSONAL VIDEO RECORDER FUNCTIONALITY", filed on April 15, 2004, the complete subject matter of which is incorporated herein by reference in its entirety.

This application makes reference to:

United States Application Serial No. (Attorney Docket No. 15674US02) filed February 3, 2005;

United States Application Serial No. 60/562,847 (Attorney Docket No. 15675US01) filed April 15, 2004;

United States Application Serial No. (Attorney Docket No. 15675US02) filed January 31, 2005;

United States Application Serial No. (Attorney Docket No. 15682US02) filed February 3, 2005;

United States Application Serial No. (Attorney Docket No. 15683US02) filed February 3, 2005; and

United States Application Serial No. (Attorney Docket No. 15685US02) filed February 3, 2005.

The above stated applications are hereby incorporated herein by reference in their entireties.

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

As the amount of video or multimedia data viewed by a viewer increases, his overall data storage requirements may also increase. One or more viewers and/or organizational entities within a corporation, for example, may wish to utilize multiple set-top-boxes having personal video recorder functionality. The personal video recorders used in these set-top-boxes may be used to save multimedia content for future use. In order to adequately operate, each of these personal video recorders requires the use of a data storage medium, often in the form of one or more data storage drives. However, a viewer may wish to increase his data storage capacity. As his applications become larger and more sophisticated, the storage capacity of the personal video recorders may reach their respective capacity limits, requiring the viewer to replace one or more of the personal video recorders. Otherwise, the viewer must upgrade the existing storage capacity of each personal video recorder. Unfortunately, the cost for replacing each personal video recorder may be quite large. Furthermore, the time involved, by the viewer, to upgrade a personal video recorder may be enormous.

The limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Aspects of the present invention may be found in a system, apparatus, and method of storing data into a common storage device by one or more data processing devices. Certain aspects of the present invention provide a system and method of storing and accessing multimedia content into the common storage device from data provided to one or more personal video recorders (PVRs). In one embodiment, personal video recorders that lack a hard disk drive may use the common storage device as a virtual hard disk drive. In one embodiment, the video storage capacity of one or more networked PVRs may be easily expanded by way of adding additional hard disk drives to the common storage device. In one embodiment, the common storage device is referred to as a network attached storage device (NAS).

In a representative embodiment, a method of implementing data storage for use by one or more personal video recorders comprises receiving data by the storage device provided by the one or more personal video recorders and storing the received data into one or more data storage drives of the storage device, wherein the storage device acts as a centralized facility for storing, distributing, and sharing the data.

In a representative embodiment, a method of providing data storage for a PVR ready set-top-box, wherein the PVR ready set-top-box is implemented without a data storage medium, comprises adding a storage device to a network. The storage device is communicatively coupled to the PVR ready set-top-box by way of the network. The PVR ready set-top-box is capable of storing data into the storage device. The PVR ready set-top-box is capable of reading data from the storage device.

In a representative embodiment, a method of increasing storage capacity of a personal video recorder comprises adding a storage device to a network, wherein the storage device is communicatively coupled to the personal video recorder by way of the network.

In a representative embodiment, a system for implementing a centralized data storage mechanism for use by one or more personal video recorders comprises a storage device containing one or more data storage drives and one or more switching devices. The one or more switching devices provides communicative coupling between the storage device and the one or more personal video recorders.

In a representative embodiment, an apparatus for storing data comprises a memory, a set of software instructions resident within the memory, and one or more data storage drives used to store the data. The data is utilized by one or more personal video recorders (PVRs), and the apparatus is communicatively coupled to the one or more personal video recorders. The apparatus further comprises a controller capable of executing the set of instructions resident in the memory, wherein the executing allows the pooling of data to occur over the one or more data storage drives.
According to an aspect of the invention, a method of implementing data storage for use by one or more personal video recorders is provided comprising:
receiving data by said storage device provided by said one or more personal video recorders; and
storing said received data into one or more data storage drives of said storage device, said storage device acting as a centralized facility for storing, distributing, and sharing said data.
Advantageously, said one or more personal video recorders comprises one or more data storage drives.
Advantageously, said data storage drives comprises hard disk drives.
Advantageously, said one or more personal video recorders lacks a data storage medium.
Advantageously, the method further comprises performing data striping of said received data using said storage device.
Advantageously, said data striping utilizes hard disk drives of different sizes.
Advantageously, said data striping comprises implementing RAID 0.
Advantageously, the method further comprises performing data mirroring of said received data using said storage device.
Advantageously, said data mirroring utilizes hard disk drives of different sizes.
Advantageously, said data mirroring comprises implementing RAID 1.
Advantageously, said data comprises audiovisual or multimedia data.
According to an aspect of the invention, a method of providing data storage for a PVR ready set-top-box is provided, said PVR ready set-top-box implemented without a data storage medium, said method comprising adding a storage device to a network, said storage device communicatively coupled to said PVR ready set-top-box by way of said network, said PVR ready set-top-box capable of storing data into said storage device, said PVR ready set-top-box capable of reading data from said storage device.
Advantageously, said storage device comprises one or more hard disk drives.
Advantageously, said storage device implements RAID 0.
Advantageously, said storage device implements RAID 1.
Advantageously, said storage device implements RAID 0+1 or RAID 10.
According to an aspect of the invention, a method of expanding data storage capacity to a personal video recorder comprising adding a data storage device to a network is provided, said data storage device communicatively coupled to said personal video recorder by way of said network.
Advantageously, said data storage device comprises one or more data storage drives.
Advantageously, said one or more data storage drives comprises one or more hard disk drives.
According to an aspect of the invention, a system for implementing a centralized data storage mechanism for use by one or more personal video recorders is provided comprising:
a storage device comprising one or more data storage drives; and
one or more switching devices, said one or more switching devices providing communicative coupling between said storage device and said one or more personal video recorders.
Advantageously, said one or more data storage drives comprises one or more hard disk drives.
Advantageously, a data pool may be implemented over said one or more data storage drives.
According to an aspect of the invention, an apparatus for storing data is provided comprising:
a memory;
a set of software instructions resident within said memory;
one or more data storage drives used to store said data, said data utilized by one or more personal video recorders (PVRs), said apparatus communicatively coupled to said one or more personal video recorders; and
a controller capable of executing said set of instructions resident in said memory, said executing allowing the pooling of data to occur over said one or more data storage drives.
Advantageously, said one or more personal video recorders comprises one or more data storage drives.
Advantageously, said one or more personal video recorders lacks a data storage drive.
Advantageously, said one or more data storage drives comprises one or more hard disk drives.

These and other advantages, aspects, and novel features of the present invention, as well as details of illustrated embodiments, thereof, will be more fully understood from the following description and drawings.

### BRIEF DESCRIPTION OF THE DRAWINGS

Figure 1 illustrates a block diagram of a typical system incorporating the use of a networked attached storage device (NAS) in accordance with an embodiment of the invention.

Figure 2 illustrates a block diagram of a typical home data network that incorporates the use of a NAS, in accordance with an embodiment of the invention.

Figure 3 illustrates a block diagram of a typical small office/ home office (SOHO) data network that incorporates the use of a NAS, in accordance with an embodiment of the invention.

Figure 4 illustrates a block diagram of a typical enterprise environment data network that incorporates the use of a NAS, in accordance with an embodiment of the invention.

Figure 5 is a block diagram of a NAS in accordance with an embodiment of the invention.

Figure 6 is a block diagram of a NAS integrated circuit chip (NASoC) in accordance with an embodiment of the invention.

### DETAILED DESCRIPTION OF THE INVENTION

Various aspects of the invention provide a system, apparatus, and method of storing data in a data storage device, such that the data may be shared, distributed, and used by one or more data processing devices communicatively coupled to the data storage device. In a representative embodiment, the one or more data processing devices comprise one or more personal video recorders (PVRs). Each of the one or more PVRs is associated with a set-top-box which processes the data for display onto a television or monitor. Each of the one or more personal video recorders may comprise one or more data storage drives. The data storage drives are used to store video or multimedia data. The data storage device is communicatively coupled to one the one or more data processing devices, such that the data stored in the data storage device may be transmitted to or received from the one or more data processing devices. For example, the storage device may be connected or attached to a network such that the one or more data processing devices may write to or read from the storage device. As a consequence, the aforementioned storage device, hereinafter, will be termed or referred to as a network attached storage device (NAS).

In a representative embodiment, the data storage device may comprise one or more data storage drives, such as hard disk drives, or any other type of media drive. The data storage device may comprise a combination of different types of data storage drives. A data storage drive may comprise any type of media capable of storing data. The media types may comprise magnetic, optical, flash memory, and the like.

Hereinafter, the term "hard disk drive" alternatively may refer to a data storage drive or any drive or component comprising a media used to store data. In a representative embodiment, one or more data storage drives or hard disk drives may be incorporated into a data storage device. The data storage device comprises the one or more data storage drives or hard disk drives. In a representative embodiment, the data storage device facilitates the incorporation of the one or more additional data storage drives or hard disk drives.

Various aspects of the invention provide for a system and method of storing data received by a set-top-box (STB) that employs a personal video recorder (PVR). Herein, the term PVR may refer to a set-top-box (STB) employing the use of a PVR. The PVR records data provided by a telecommunications carrier or cable operator, such that the data may be used or viewed in the future. The PVR may be part of a STB. The PVR may or may not comprise a storage medium such as a data storage drive. In a representative embodiment, the PVR comprises or contains a data storage drive, such as one or more hard disk drives. The data may be received by the NAS by way of a set-top-box (STB) communicatively coupled to a cable operator's headend, for example. A cable modem, of course, provides data and internet programming from a cable operator. In another representative embodiment, the PVR lacks a device that is capable of storing the received data, and may be referred to as a PVR ready STB (i.e., an STB providing PVR functionality that has no data storage drive). For example, the PVR may not comprise any type of data storage drive or hard disk drive. In a representative embodiment, the PVR is implemented without a hard disk drive as a cost saving measure provided to a consumer or purchaser. Various aspects of the present invention allow for one or more PVRs lacking an exemplary hard disk drive to "off-load" its data to a NAS. In this fashion, the NAS acts as a virtual PVR hard disk drive to the one or more PVRs. Further, the NAS acts as a centralized storage location or reservoir for all PVRs within a system or network. In another representative embodiment, a combination of the two types of PVRs (i.e., PVRs with and without data storage drives) may utilize a NAS as a centralized data storage device. In one embodiment, the PVRs may be situated in one or more networks and may communicate to the NAS by way of one or more switching devices. The switching devices may comprise routers, switches, and hubs, for example.

In a representative embodiment, the data stored in the NAS comprises audiovisual or multimedia data. The data may comprise any type of video or audio data such as MPEG data generated by a telecommunications carrier such as a cable operator. The NAS may be communicatively coupled to one or more data processing devices, including one or more PVRs. The one or more data processing devices may comprise a desktop computer, a laptop computer, a PDA, a cellular phone, a digital camera, a video camcorder, digital recorder or a MP3 player. Various aspects of the present invention allow any one of the one or more data processing devices to write to and read from the NAS. The NAS may act as a storage facility to share and distribute data throughout the one or more data processing devices located in one or more linked networks.

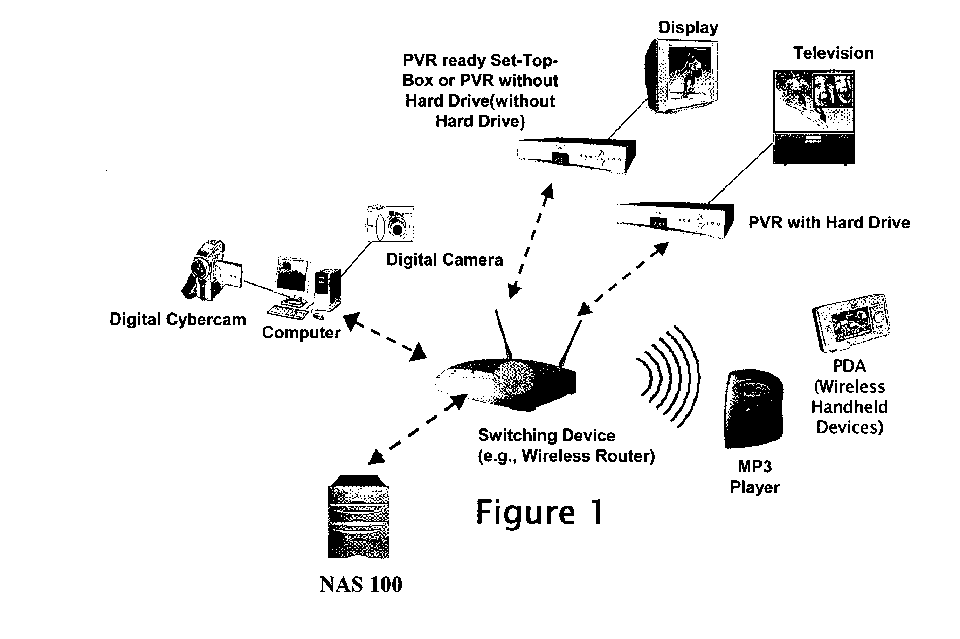

Figure 1 illustrates a block diagram of a typical system incorporating the use of a NAS 100 in accordance with an embodiment of the invention. The NAS 100 provides data storage for one or more data processing devices. As illustrated, an exemplary switching device provides connectivity of the NAS 100 to the one or more data processing devices. The switching device is capable of providing connectivity using wireless or wireline communications. For example, a wireless router may utilize any one of the following wireless or wireline data communications protocols: 10/100 Ethernet, gigabit Ethernet, 802.11x, Bluetooth, and the like. The one or more data processing devices comprises devices such as a digital cybercam, digital camera, MP3 player, PDA, and one or more personal video recorders (PVRs). As illustrated, a PVR may be equipped with or without a hard disk drive. A PVR may be referred to as a set-top-box (STB) that incorporates personal video recorder capabilities. Alternatively, the PVR may be referred to as a PVR-STB. The PVRs illustrated, are connected to a television or a monitor capable of playing multimedia content to a home user. Use of the NAS 100 provides a centralized storage device for multimedia content received by the one or more PVRs. As a consequence of storing content into a NAS 100, PVRs lacking a storage facility, such as a hard disk drive, may store any data it receives into the NAS 100. Further, any data stored by other data processing devices, including PVRs, may be easily accessed and viewed by any of the one or more data processing devices. For example, a PVR without a hard drive may access multimedia content originally stored into the NAS 100 by a PVR with a hard drive, and vice-versa. As a result, the NAS 100 facilitates sharing of data among the one or more data processing devices. Since it provides a centralized storage mechanism, the NAS 100 may be considered a "virtual storage device" by the one or more data processing devices. The NAS 100 is configured such that its storage capacity may be easily expanded. In one embodiment, the NAS 100 may accept additional hard disk drives. In an alternate embodiment, the NAS may be configured for expansion, by connecting one or more additional NAS' to the existing NAS. The NAS may be linked together by one or more connectors and wires. As such, the NAS 100 provides an easily scalable and flexible storage mechanism that accommodates for future data storage growth. In the one or more embodiments, the NAS 100 also is capable of providing data mirroring and data striping capabilities, using two or more hard drives.

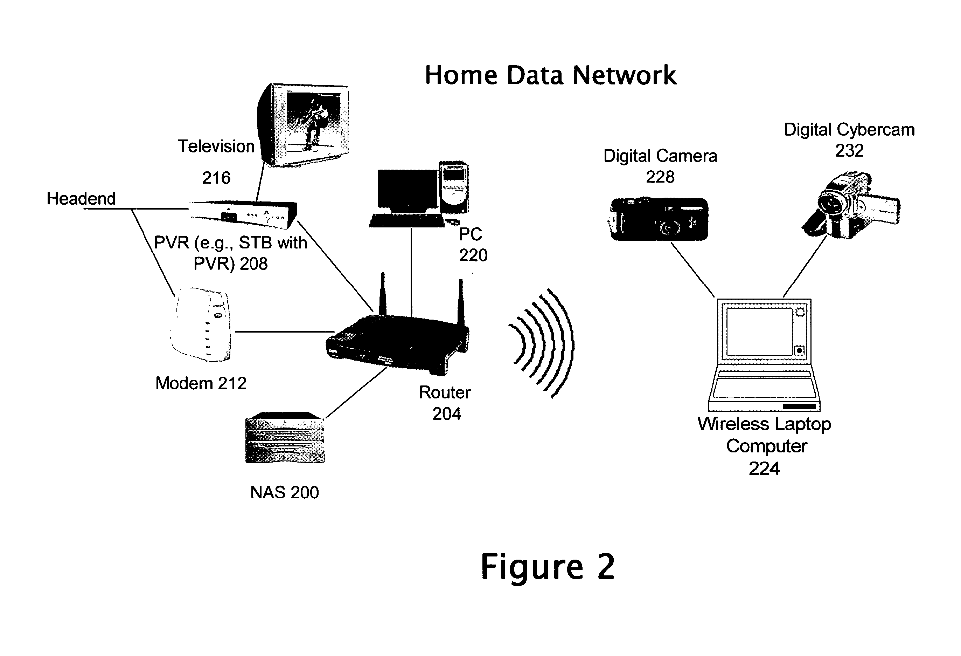

Figure 2 illustrates a block diagram of a typical home data network that incorporates the use of a NAS 200, in accordance with an embodiment of the invention. As illustrated, a router 204 provides connectivity to the NAS 200 to the one or more data processing devices. The one or more data processing devices may comprise a PVR (or STB with PVR) 208, a personal computer (PC) 220, a wireless laptop computer 224, a digital camera 228, a video cybercam 232, or any other like device. As shown, the router 204 is capable of providing connectivity using wireless or wireline communications. In order to provide connectivity of the NAS 200 with the one or more data processing devices, the router may utilize any one of the following wireless or wireline data communications protocols: 10/100 Ethernet, gigabit Ethernet, 802.11x, Bluetooth, and the like. In this embodiment, the PVR 208 connects to the NAS 200 by way of the router 204. The PVR 208 may receive multimedia programming from a telecommunications carrier such as a cable operator from the cable operator's headend, for example. The modem 212 provides internet access to the one or more data processing devices shown in Figure 2, by way of the router 204. Any data received by the modem may be stored in the NAS 200 by way of communication through the router 204. The PVR 208 may access multimedia data from the NAS 200 for viewing on a television or monitor 216. The personal computer (PC) 220 is capable of accessing data from the NAS 200 by way of the router 204. The PC 220 or some other PVR (not shown in Figure 2) may play MPEG or other multimedia data it receives from the NAS 200 that was originally stored by the PVR 208 or one of the one or more data processing devices. As illustrated, the wireless laptop computer 224 communicates with the digital camera 228 and the digital cybercam 232 by way of a wireline connection. The digital camera 228 and/or the digital cybercam 232 may transfer data to and from the NAS 200 by way of the wireless laptop 224 communicating to the wireless router 204.

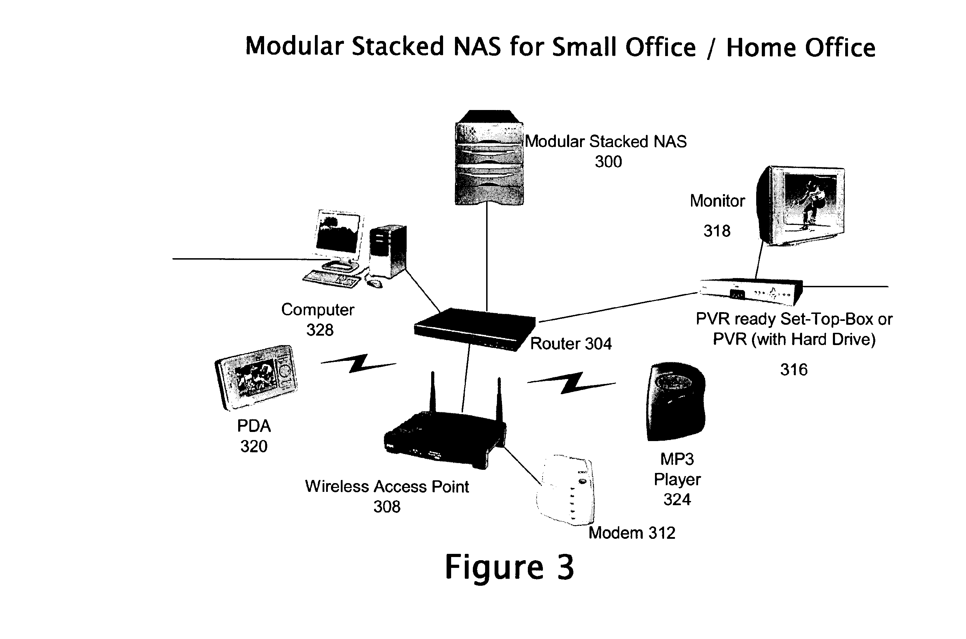

Figure 3 illustrates a block diagram of a typical small office/ home office (SOHO) data network that incorporates the use of a NAS 300, in accordance with an embodiment of the invention. The NAS 300 is adapted for use in a Small Business / Home Office (SOHO) environment. The NAS 300 is configured for future storage capacity expansion by being modular or stackable, as desired. Because the NAS 300 is scalable, storage expansion is easily accomplished, for example, when the small office hires additional employees. The embodiment illustrated may be suitable for offices that employ professionals such as home office workers and graphic designers who wish to view video programming provided by a cable operator that utilizes a personal video recorder (PVR) 316. The PVR 316 may comprise a data storage drive. The PVR 316, in another embodiment, may lack a data storage drive (e.g., PVR ready STB). The PVR 316 retrieves data from the NAS 300 or from its data storage device (if applicable), for display to the connected monitor 318. Use of the NAS 300 may be highly advantageous for providing video programming over one or more networks, such as implemented in a SOHO, since any type of video data may be stored in the modular, stackable NAS 300. Because of its modularity and ease of configuration, the functionality of the NAS 300 reduces a typical network manager or IT professional's workload when a storage overflow or storage device malfunction occurs. As illustrated, a router 304 provides connectivity of the NAS 300 to the one or more data processing devices. The one or more data processing devices may comprise a PDA 320, a MP3 player 324, computer 328 or any other like device. As shown, the router 304 is capable of providing connectivity using wireless or wireline communications. In order to provide connectivity of the NAS 300 to the one or more data processing devices, the router may utilize any one of the following wireless or wireline data communications protocols: 10/100 Ethernet, gigabit Ethernet, 802.11x, Bluetooth, and the like. A modem 312, such as a cable modem, may provide internet connectivity to the one or more data processing devices by way of the wireless access point 308. In this representative embodiment, the wireless access point 308 connects to the router 304 by way of wireline communications.

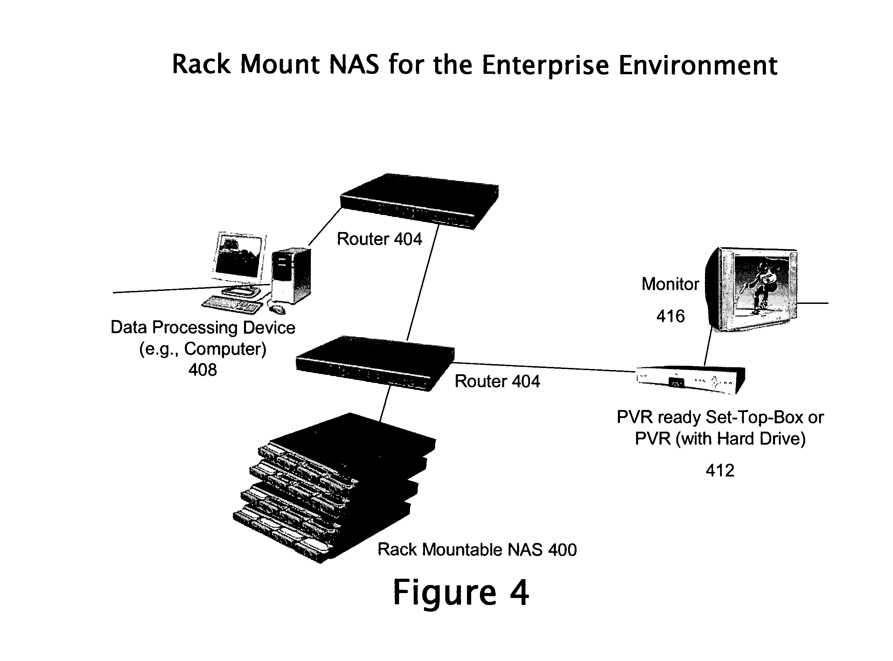

Figure 4 illustrates a block diagram of a typical enterprise environment data network that incorporates the use of a NAS 400, in accordance with an embodiment of the invention. The NAS 400 is adapted for use in an enterprise environment by providing hard drive expansion capabilities. In this embodiment, the NAS 400 is scalable by mounting additional NAS 400 units on top of each other in a stackable, rack mountable configuration, as desired. Because the NAS 400 is scalable, storage expansion is easily accomplished, for example, when the enterprise hires additional employees. A personal video recorder (which may be PVR ready or a PVR with data storage drive) 412 is used to process data provided by a telecommunications operator or cable operator) for display to a monitor 416. One or more routers 404 act as switching devices to provide connectivity from the NAS 400 to one or more data processing devices 408 as shown. In an enterprise environment, distributed broadcasts may be made through multiple networks throughout the organization, using an exemplary rack mountable NAS 400. In a representative embodiment, a company may wish to broadcast programs to all of its employees. For example, a president of a corporation may wish to broadcast a speech or message to his employees located in different company locations. The speech may be stored for future broadcasts to the different company locations by using the NAS 400. The NAS 400, as a result, may provide a convenient data storage mechanism to an organization. The data processing devices 408 may comprise one or more computers, as illustrated in Figure 4.

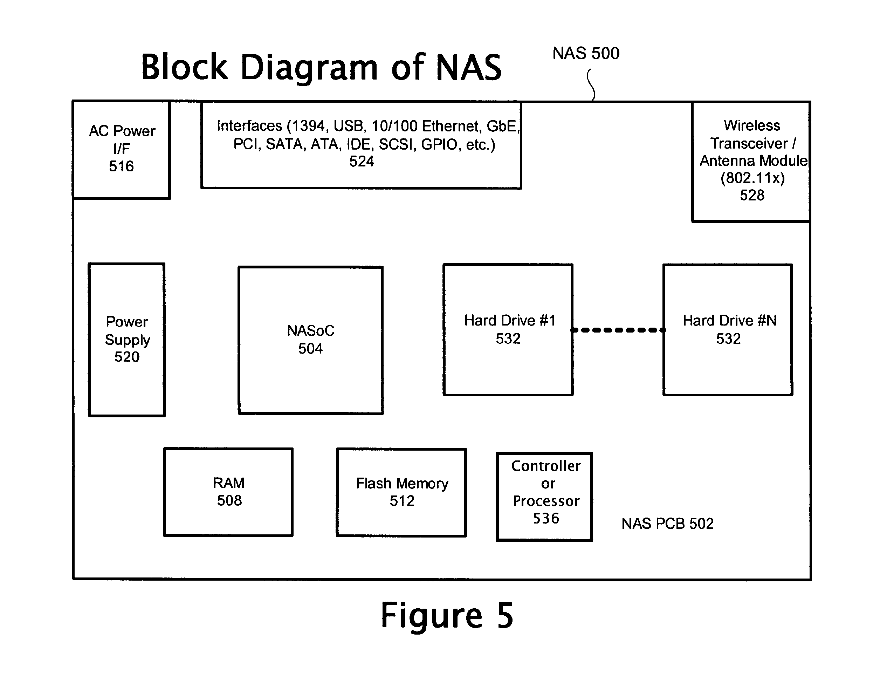

Figure 5 is a block diagram of a network attached storage device (NAS) 500 in accordance with an embodiment of the invention. Using the NAS 500 provides a centralized approach to conveniently managing and distributing video programming. The NAS 500 may comprise a housing and/or chassis that effectively seats a printed circuit board (NAS PCB) 502. As illustrated, the NAS PCB 502 seats one or more components. The one or more components are electrically connected by way of the printed circuit board (PCB) 502. The one or more components comprises a NAS chip (NASoC) 504, a random access memory (RAM) 508, a flash memory 512, an AC power interface (I/F) 516, a power supply 520, a block of interfaces 524, a wireless transceiver / antenna module 528, one or more hard disk drives 532, and a controller (or processor) 536. The interface block 524 may comprise one or more of the following interfaces: IEEE 1394, USB, 10/100 Ethernet, gigabit Ethernet, PCI, SATA, ATA, IDE, SCSI, GPIO, etc.. The wireless transceiver / antenna module 528 may comprise a attachable module or mini-PCI card that may be optionally connected or attached to the NAS' printed circuit board 502. The one or more hard disk drives 532 may comprise any number of hard drives 532 depending on the design of the NAS 500. The printed circuit board 502 may be configured to accommodate an appropriate number of hard disk drives 532. The number of hard drives 532 utilized may depend on whether data mirroring or data striping (i.e., RAID) is provided by the NAS 500. In one embodiment, RAID implementation may be performed seamlessly using hard disk drives of different types (e.g.., different sizes and speeds). In one embodiment, the controller 536 provides control for any one of the one or more components communicatively coupled to the NASoC 504.

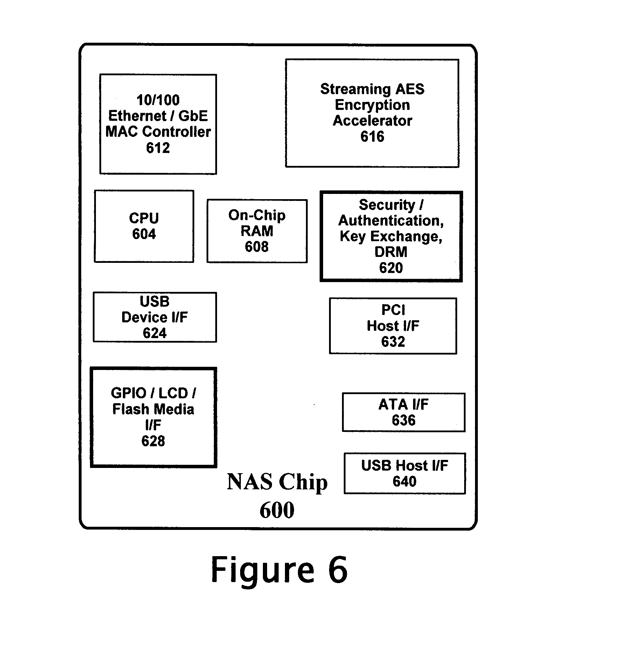

Figure 6 is a block diagram of a NAS chip (NASoC) 600 in accordance with an embodiment of the invention. The NASoC 600 is an integrated circuit mounted on the previously described NAS PCB. The NASoC 600 provides one or more functions that allow the NAS to properly operate. The NASoC 600 generates the signals to enable one or more functions (i.e., capacity expansion, striping, and/or mirroring) provided by the NAS previously described in reference to Figure 5. The NASoC 600 comprises a central processing unit (CPU) 604, an on-chip random access memory 608, a Ethernet / MAC controller 612, an encryption accelerator 616, a security / authentication, key exchange, DRM chip 620, and a number of interfaces 624, 628, 632, 636, 640. For example the following interfaces may be used: USB Device I/F 624, a PCI Host I/F 632, a GPIO / LCD / Flash Media I/F 628, an ATA I/F 636, and a USB Host I/F 640. The NAS chip 600 may communicate and/or connect to the one or more components described in reference to Figure 5.

Referring to Figure 5, the NAS may incorporate varying numbers of data storage drives or hard disk drives depending on its storage and RAID requirements. In one embodiment, the NAS may incorporate 1, 2, or 4 hard disk drives depending on type of use. For example, the NAS may utilize 4 hard disk drives for implementing RAID 0+1 or RAID 10 (both data mirroring and data striping), suitable for use in a small office / business environment. On the other hand, the NAS may utilize only 1 or 2 hard disk drives in a home (or household) environment since the storage capacity utilized is typically less than that utilized in an office or business environment. Similarly, memory components utilized in the NAS may be varied depending on type of use. As the data storage requirements increase and as the frequency of data storage related requests increase, the performance of the NAS may be improved to meet its operational needs, by way of increasing memory size of the NAS. For example, flash or DRAM memory capacities may be increased in order to improve the processing performance of the NAS. Similarly, the chassis size, power circuitry, and other components may be adjusted to meet the processing requirements of its operational environment.

In a representative embodiment, one or more hard drives utilized by a NAS may be easily swappable by a lay person, when the NAS is powered down. In an alternate embodiment, a hard drive may be immediately "hot-swapped", for example, when a hard drive failure occurs in one of the drives used by the NAS. In one embodiment, software that resides within the NAS facilitates automatic configuration of a computing device communicatively coupled to the NAS. For example, user execution of client software for configuration purposes, typically used in prior art systems, is obviated when the NAS is communicatively coupled to other computing devices in a network. The network may comprise a local area network (LAN).

Further aspects of the invention provide a consolidation of storage to a single NAS, resulting in one or more efficiencies. Certain aspects of the present invention provide more efficient use of storage capacity since multiple data processing devices may share storage capacity provided by the single NAS.

Certain aspects of the invention provide for a pooling of data storage capacity over multiple data storage drives or hard disk drives. In one embodiment, a logical drive or data pool may be created by concatenating unused portions of one or more drives. In one embodiment, the NAS employs hardware and/or software that implements the pooling previously described. In one embodiment, the NAS may incorporate multiple hard disk drives in order to implement one or more levels of RAID functionality. One example of data pooling may be found in U.S. patent application Serial No. ,_entitled "METHOD AND SYSTEM OF DATA STORAGE CAPACITY ALLOCATION AND MANAGEMENT USING ONE OR MORE DATA STORAGE DRIVES" filed January 31, 2005 (Attorney Docket No. 15675US02), the complete subject matter of which is incorporated herein by reference in its entirety.

Aspects of the invention include the seamless expansion of storage capacity provided to one or more personal video recorders and/or PVR ready set-top-boxes, by way of a network attached storage device (NAS). The one or more personal video recorders and/or PVR ready set-top-boxes may reside within one or more networks. The networks may be communicatively coupled by way of one or more switching devices. In a representative embodiment, the personal video recorders and/or PVR ready set-top-boxes are communicatively coupled to the NAS by way of the one or more networks. In one embodiment, the video storage capacity of one or more networked PVRs may be expanded by way of adding additional data storage drives or hard disk drives to the NAS. Various aspects of the present invention provide that a PVR user may be assured that storage capacity increases may be easily implemented and may not pose an issue as his multimedia requirements increase in the future.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiments disclosed, but that the invention will include all embodiments falling within the scope of the appended claims.

## Claims

1. A method of implementing data storage for use by one or more personal video recorders comprising:
receiving data by said storage device provided by said one or more personal video recorders; and
storing said received data into one or more data storage drives of said storage device, said storage device acting as a centralized facility for storing, distributing, and sharing said data.

2. The method of Claim 1 wherein said one or more personal video recorders comprises one or more data storage drives.

3. The method of Claim 2 wherein said data storage drives comprises hard disk drives.

4. The method of Claim 1 wherein said one or more personal video recorders lacks a data storage medium.

5. A method of providing data storage for a PVR ready set-top-box, said PVR ready set-top-box implemented without a data storage medium, said method comprising adding a storage device to a network, said storage device communicatively coupled to said PVR ready set-top-box by way of said network, said PVR ready set-top-box capable of storing data into said storage device, said PVR ready set-top-box capable of reading data from said storage device.

6. A method of expanding data storage capacity to a personal video recorder comprising adding a data storage device to a network, said data storage device communicatively coupled to said personal video recorder by way of said network.

7. A system for implementing a centralized data storage mechanism for use by one or more personal video recorders comprising:
a storage device comprising one or more data storage drives; and
one or more switching devices, said one or more switching devices providing communicative coupling between said storage device and said one or more personal video recorders.

8. The system of Claim 7 wherein said one or more data storage drives comprises one or more hard disk drives.

9. An apparatus for storing data comprising:
a memory;
a set of software instructions resident within said memory;
one or more data storage drives used to store said data, said data utilized by one or more personal video recorders (PVRs), said apparatus communicatively coupled to said one or more personal video recorders; and
a controller capable of executing said set of instructions resident in said memory, said executing allowing the pooling of data to occur over said one or more data storage drives.

10. The apparatus of Claim 9 wherein said one or more personal video recorders comprises one or more data storage drives.
